# EUROPÄISCHE PATENTSCHRIFT

(11) **EP 0 482 334 B1**
(45) Veröffentlichungstag und Bekanntmachung des Hinweises auf die Patenterteilung: **07.12.1994**
(21) Anmeldenummer: 91115356.7
(22) Anmeldetag: 11.09.1991
(51) Int. Cl.: B65B 5/06, B65B 35/44, B65G 17/00

(54) **Einrichtung zum Überführen von Stückgütern**
Device for transferring articles
Dispositif pour transférer des articles

(30) Priorität: 20.10.1990 DE 4033475
(43) Veröffentlichungstag der Anmeldung: 29.04.1992
(73) Patentinhaber: HANDTMANN A-PUNKT AUTOMATION GMBH, D-88255 Baienfurt (DE)
(72) Erfinder: Strasser, Karl-Heinz, W-7981 Berg bei Ravensburg (DE)
(74) Vertreter: Engelhardt, Guido, Dipl.-Ing.

(56) Entgegenhaltungen:
- EP-A- 0 330 609
- CH-A- 639 613
- FR-A- 2 612 882

## Beschreibung

Die Erfindung bezieht sich auf eine Einrichtung zum Überführen von Stückgütern von einer Station zu einer anderen, beispielsweise von Wurstwaren oder dgl. von einer Erzeuger- oder Beschickungsstation in eine Verpackungsvorrichtung, mittels eines antreibbaren Transportbandes, wobei zur Lagerung der zu überführenden Stückgüter oben offene Behältnisse in Form von vorzugsweise rechteckig ausgebildeten Schalen oder dgl. vorgesehen sind, in denen die Stückgüter portionsweise einlegbar und die in einer oder mehreren Reihen auf dem Transportband abgestützt sind, das aus einem ersten Transportbandabschnitt zur Beförderung der befüllten Behältnisse und einem zweiten Transportbandabschnitt zur Rückführung der entleerten Behältnisse zusammengesetzt ist, und wobei dem Transportband eine Vorrichtung zugeordnet ist, mittels der die Stückgüter aus den Behältnissen in die Verpackungsvorrichtung einbringbar sind.

Eine Transporteinrichtung dieser Art ist durch die CH-A-63 96 13 bekannt. Die zum Einlegen in Verkaufs- oder Versandpackungen bestimmten Artikel werden hierbei in Transportelemente eingesteckt und mittels einer eine Umlaufbewegung erzeugenden Transportanlage von einer Produktionsstufe zu einer Verpackungsstufe befördert. Die zur Aufnahme der Artikel vorgesehenen Behälter werden mittels zweier nebeneinander angeordneter und in Gegenrichtung umlaufender Plattenbänder, die durch Seitenwände begrenzt und in den beiden Endbereichen mit durch Seitenwände gebildeten Überführungsabschnitte versehen sind, transportiert.

Bedingt durch die beiden nebeneinander angeordneten Plattenbänder erfordert diese bekannte Transporteinrichtung, die für bestimmte Waren, nämlich Glace-Cornets, ausgelegt ist, einen großen Platzbedarf und eine Anpassung an andere Erzeugnisse ist nicht ohne weiteres zu bewerkstelligen. Trotz hohem Personalaufwand für die Überwachung und die vorzunehmenden Korrekturen sowie Reinigungsarbeiten sind demnach bei erheblichen Betriebskosten Betriebsunterbrechungen nahezu nicht vermeidbar, und ein vielseitiger Einsatz ist nicht gegeben.

Aufgabe der Erfindung ist es daher, eine Transporteinrichtung der eingangs genannten Gattung zu schaffen, mittels der es ohne Schwierigkeiten möglich ist, auf äußerst hygienische Weise und ohne daß der dazu erforderliche Platzbedarf groß ist, Stückgüter von einer Station, beispielsweise einer Erzeuger- oder Beschickungsstation, zu einer anderen Station, z. B. einer Verpackungsvorrichtung, überzuführen. Hierbei soll ausgeschlossen sein, daß die zu verarbeitenden Waren unmittelbar mit dem Transportband in Berührung kommen und/oder von Hand berührt und ausgerichtet werden müssen, vielmehr soll sichergestellt sein, daß diese stets lagegerecht gefördert werden, so daß ein sicheres Übernehmen gewährleistet ist. Des weiteren soll die Transporteinrichtung leicht und in kurzer Zeit an unterschiedliche Erzeugnisse und Arbeitstakte anpaßbar sein, vor allem aber soll sichergestellt sein, daß bei sehr geringem Personalaufwand ein berührungsloser und äußerst sicherer Transport der zu fördernden Waren gegeben ist.

Gemäß der Erfindung wird dies bei einer Einrichtung zur Überführung von Stückgütern von einer zu einer anderen Station mittels eines antreibbaren aus einem ersten und einem zweiten Transportbandabschnitt bestehenden Transportbandes dadurch erreicht, daß die beiden Transportbandabschnitte vertikal übereinander in unterschiedlichen Ebenen verlaufen und gegensinnig zueinander gesteuert antreibbar sind und daß das Transportband mit Übergabestationen versehen ist, die aus in der Höhe verstellbar ausgebildeten endlosen Förderbändern bestehen und mittels denen die Behältnisse in den Endbereichen des Transportbandes von dem einen Transportbandabschnitt auf den anderen Transportbandabschnitt beförderbar sind.

Zweckmäßig ist es hierbei, die Förderbänder der Übergabestationen unabhängig von den Transportbandabschnitten anzutreiben und mittels eines Hubgliedes wechselweise an diese anzuschließen.

Als Einrichtung zum Überführen der Stückgüter aus den Behältnissen in die Verpackungsvorrichtung kann ein Drehlader vorgesehen werden, der einen drehbar gelagerten mit Greifern oder Unterdruckkammern versehenen Greifarm aufweist, mittels dem die Stückgüter portions- und taktweise in beispielsweise ausgeformte Verpackungsbehälter einlegbar sind.

Angebracht ist es ferner, einem oder beiden Transportbandabschnitten einen jeweils durch einen Querschieber gebildeten Linienverteiler zuzuordnen.

Angezeigt ist es auch, den ersten Transportbandabschnitt mit einer vorzugsweise selbsttätig arbeitenden Fülleinrichtung, beispielsweise einer Wurstaufschneideeinrichtung oder einer Beschickungsvorrichtung, zu versehen, der eine Kontrollstation in Form eines unabhängig antreibbaren, an eine Waage angeschlossenen Förderbandes nachgeschaltet sein kann, der wiederum eine Auswurfstation in Form eines mit einem unabhängig antreibbaren Förderbandes zusammenwirkenden Querschiebers nachgeschaltet ist, die durch die Kontrollstation in Abhängigkeit von deren Meßergebnisse betätigbar ist.

Des weiteren können der Fülleinrichtung bzw. der Beschickungsvorrichtung eine durch ein unabhängig antreibbares Förderband gebildete Pufferzone nachgeschaltet und dem zweiten Transportbandabschnitt eine oder mehrere Stationen zur Befüllung der Behältnisse von Hand zugeordnet sein.

Wird eine Einrichtung zum Überführen von Stückgütern von einer Station zu einer anderen gemäß der Erfindung ausgebildet, so ist es möglich, Waren unterschiedlicher Art und Gestaltung auf sehr sichere und hygienische Weise, beispielsweise von einer Erzeuger- oder Beschickungsstation in eine Verpackungsvorrichtung, einzubringen, ohne daß dazu ein großer Platzbedarf erforderlich ist und ohne daß dabei die Waren auf dem Transportband aufliegen und/oder von Hand berührt und ausgerichtet werden müssen. Da hierbei die zu befördernden Waren in Behältnissen lagern, die leicht auszurichten, auszutauschen und/oder zu reinigen sind, ist stets ein nahezu störungsfreier Transport gewährleistet.

Des weiteren ist von Vorteil, daß lediglich durch Auswechseln der Behältnisse eine Anpassung an unterschiedliche Waren vorzunehmen ist und daß auch die Transportgeschwindigkeiten problemlos an veränderte Taktzeiten anpaßbar sind. Ein vielseitiger Einsatzbereich ist somit gegeben, zumal auch ein störungsfreier Transport in gekühlten Räumen sichergestellt ist. Ferner sind die Behälter gut befüllbar und leicht zu positionieren, auch können diese im Bedarfsfall, und zwar einzeln, gereinigt werden, dadurch bedingte Betriebsunterbrechungen und Ausfallzeiten sind somit, zumal entsprechende Pufferzonen vorgesehen und somit befüllte und unbefüllte Behältnisse gespeichert werden können und in den einzelnen Bereichen auch unterschiedliche Arbeitsgeschwindigkeiten einzustellen sind, nahezu ausgeschlossen. Bei geringem Bauaufwand und einfacher Handhabung ermöglicht die vorschlagsgemäße Transporteinrichtung demnach eine betriebssichere Überführung von Stückgütern unterschiedlicher Art von einer zu einer anderen Station.

In der Zeichnung sind zwei Ausführungsbeispiele der gemäß der Erfindung ausgebildeten Transporteinrichtung dargestellt, die nachfolgend im einzelnene erläutert sind. Hierbei zeigt:
- Figur 1: eine aus zwei vertikal übereinander angeordneten Transportbandabschnitten bestehende und zwischen einer Beschickungsstation sowie einer Verpackungsvorrichtung eingesetzte Transporteinrichtung, in perspektivischer Darstellung,
- Figur 2: ausschnittweise die Transporteinrichtung nach Figur 1 mit einer andersartig ausgestalteten Beschickungsstation
und
- Figur 3: eine aus zwei in einer Ebene angeordneten Transportbandabschnitten gebildete Transporteinrichtung, in Draufsicht.

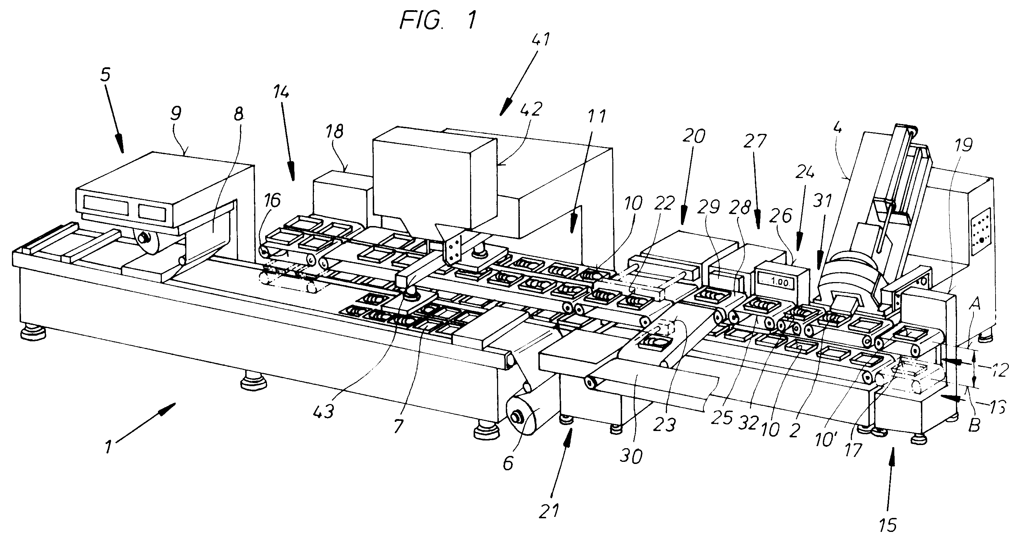

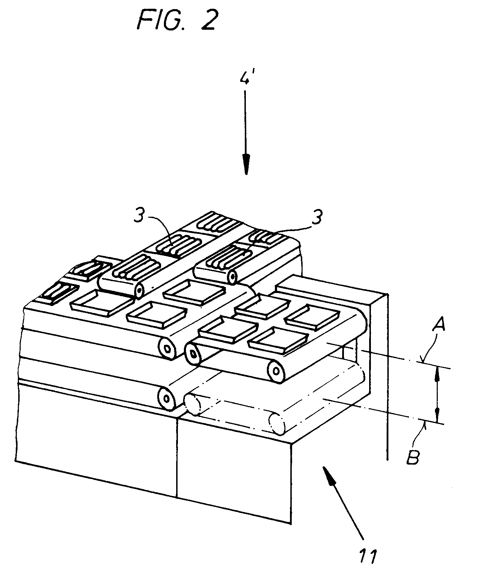

Die in Figur 1 dargestellte und mit 1 bezeichnete Transporteinrichtung dient zur Förderung bzw. zum Überführen von Stückgütern, beispielsweise von geschnittener Wurst 2 oder Würstchen 3, mittels eines Transportbandes 11 von einer Station zu einer anderen, ohne daß dabei die zu transportierenden Waren von Hand berührt werden müssen. Die portionsweise in einer Beschickungsstation 4 geschnittene Wurst 2 wird dazu in obenen offenen Behältnissen 10 eingelegt, die mittels der Transporteinrichtung 1 sowie einer Vorrichtung 41 einer Verpackungsvorrichtung 5 zugeführt und in dieser aus einer Folie 6 geformte Schalen 7 eingelegt werden, die in einem Tunnel 9 mittels einer Folie 8 verschweißt werden. Gemäß Figur 2 kann die Beschickungsstation 4' auch als Förderband ausgebildet sein.

Um einen störungsfreien Betrieb und eine vielseitige Verwendbarkeit zu gewährleisten, ist das Transportband 11 der Transporteinrichtung 1 durch zwei Transportbandabschnitte 12 und 13 gebildet, die bei der Ausgestaltung nach Figur 1 in zwei Ebenen A und B vertikal übereinander angeordnet sind. Der Transportbandabschnitt 12 dient hierbei zur Förderung der befüllten Behältnisse 10, mittels des Transportbandabschnittes 13 werden dagegen die entleerten Behältnisse 10' zur Beschickungsstation 4 zurückgeführt.

Um dies bewerkstelligen zu können, ist in den beiden Endbereichen der Transportbandabschnitte 12 und 13 jeweils eine Übergabestation 14 bzw. 15 vorgesehen, die aus höhenverstellbaren Förderbändern 16 bzw. 17 bestehen. Mittels Hubgliedern 18 und 19 sind die Förderbänder 16 und 17 wechselweise jeweils in die Ebenen A oder B verstellbar.

Den beiden Transportbandabschnitten 12 und 13 sind des weiteren Linienverteiler 20 und 21 zugeordnet, mittels denen die in einer Reihe befüllten Behältnisse 10 zweireihig angeordnet und die zweireihig zurückgeführten entleerten Behältnisse 10' wiederum in eine Reihe gebracht werden können. Die Linienverteiler 20 und 21 sind durch Querschieber 22 bzw. 23 gebildet.

Des weiteren ist der Transportbandabschnitt 12 mit einer Kontrollstation 24 ausgerüstet, die durch ein an eine Waage 26 angeschlossenes Förderband 25 gebildet ist. Der Kontrollstation 24 ist ferner eine ebenfalls aus einem Förderband 28 bestehende Auswurfstation 27 nachgeschaltet, mittels der fehlerhaft befüllte Behältnisse 10 ausgesondert und durch einen Schieber 29 auf ein Förderband 30 gebracht werden können. Vor der Kontrollstation 24 ist eine Pufferzone 31 vorgesehen, die wiederum aus einem Förderband 32 besteht. Die Transportbandabschnitte 12 und 13 sind unabhängig voneinander und gegensinnig zueinander antreibbar, auch können die Förderbänder 16 und 17 der Übergabestationen 14, 15 sowie das Förderband 25 der Kontrollstation 24, das Förderband 28 der Auswurfstation 27 und das Förderband 32 der Pufferzone 31, wie auch die anderen Bereiche der beiden Transportbandabschnitte 12 und 13, unabhängig voneinander gesteuert angetrieben werden.

Die der Verpackungsvorrichtung 5 zuzuführende Wurst 2 bzw. die Würstchen 3 werden in vor der Beschickungsstation 4 bzw. 4' stillstehenden Behältnissen 10 portionsweise eingelegt, und diese werden sodann über die Pufferzone 31 der Kontrollstation 24 zugeführt. Bei korrekter Einlage werden die befüllten zunächst in einer Reihe transportierten Behältnisse 10 mittels des Linienverteilers 20 auf zwei Reihen verteilt, bei fehlerhafter Einlage dagegen wird das jeweilige Behältnis 10 in der Auswurfstation 27 auf das Förderband 30 gebracht und somit aussortiert. Aus den befüllten und taktweise der Vorrichtung 41, die aus einem Drehlader 42 mit einem rotierend antreibbaren Greifarm 43 besteht, zugeführten Behältnissen 10 werden daraufhin. mittels dieser die Wurst 2 bzw. die Würstchen 3 in die ausgeformten Schalen 7 eingelegt, und in der Verpackungsvorrichtung 5 wird deren Verpackung fertiggestellt.

Zur Rückführung werden die entleerten Behältnisse 10' in der Übergabestation 14 mittels des Hubgliedes 18 in die Ebene B des Transportbandabschnittes 13 abgesenkt und durch diesen zunächst in zwei Reihen, nach Durchfahren des Linienverteilers 21 einreihig, der Übergabestation 15 zugeführt. Die Überführung von dem Transportbandabschnitt 13 auf den Transportbandabschnitt 12 und somit von der Ebene B in die Ebene A wird sodann in der Übergabestation 15 bewerkstelligt.

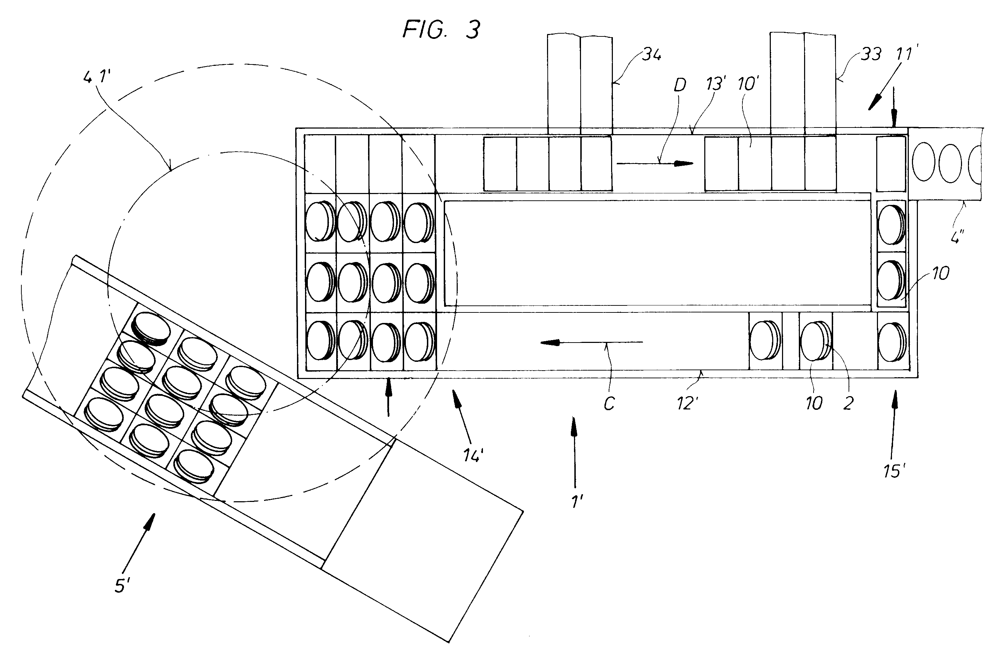

Bei dem Ausführungsbeispiel nach Figur 3 sind die Transportbandabschnitte 12' und 13' des Transportbandes 11' der Transporteinrichtung 1' in zwei parallel zueinander verlaufenden Straßen C und D angeordnet. Die mittels der Beschickungsstation 4'' zugeführten und ebenfalls in Behältnissen 10 eingelegten Stückgüter 2 werden hierbei in der Übergabestation 15' dem Transportbandabschnitt 12' zugeführt und mittels diesem zu der Vorrichtung 41' transportiert, durch die die Stückgüter den Behältnissen 10 entnommen und in die Verpackungsvorrichtung 5' eingebracht werden. Die entleerten Behältnisse 10' gelangen durch die Übergabestation 14' auf den Transportbandabschnitt 13' und mittels diesem wiederum vor die Beschickungsstation 4'', um erneut befüllt werden zu können.

Bei der Ausgestaltung nach Figur 3 sind dem Transportbandabschnitt 13' weitere Ladestationen 33 und 34 zugeordnet, in denen Behältnisse auch von Hand mit Stückgütern befüllt werden können.

## Patentansprüche

1. Einrichtung (1) zum Überführen von Stückgütern (2, 3) von einer Station zu einer anderen, beispielsweise von Wurstwaren oder dgl. von einer Erzeuger- oder Beschickungsstation (4) in eine Verpackungsvorrichtung (5), mittels eines antreibbaren Transportbandes (11), wobei zur Lagerung der zu überführenden Stückgüter (2, 3) oben offene Behältnisse (10, 10') in Form von vorzugsweise rechteckig ausgebildeten Schalen oder dgl. vorgesehen sind, in denen die Stückgüter (2, 3) portionsweise einlegbar und die in einer oder mehreren Reihen auf dem Transportband (11) abgestützt sind, das aus einem ersten Transportbandabschnitt (12) zur Beförderung der befüllten Behältnisse (10) und einem zweiten Transportbandabschnitt (13) zur Rückführung der entleerten Behältnisse (10') zusammengesetzt ist, und wobei dem Transportband (11) eine Vorrichtung (41) zugeordnet ist, mittels der die Stückgüter (2,3) aus den Behältnissen (10) in die Verpackungsvorrichtung (5) einbringbar sind,
**dadurch gekennzeichnet,**
daß die beiden Transportbandabschnitte (12, 13) vertikal übereinander in unterschiedlichen Ebenen (A, B) verlaufen und gegensinnig zueinander gesteuert antreibbar sind und
daß das Transportband (11) mit Übergabestationen (14,15) versehen ist, die aus in der Höhe verstellbar ausgebildeten endlosen Förderbändern (16, 17) bestehen und mittels denen die Behältnisse (10, 10') in den Endbereichen des Transportbandes (11) von dem einen Transportbandabschnitt (12 bzw. 13) auf den anderen Transportbandabschnitt (13 bzw. 12) beförderbar sind.

2. Einrichtung nach Anspruch 1,
**dadurch gekennzeichnet,**
daß die Förderbänder (16, 17) der Übergabestationen (14, 15) unabhängig von den Transportbandabschnitten (12, 13) antreibbar und mittels eines Hubgliedes (18, 19) wechselweise an diese anschließbar sind.

3. Einrichtung nach Anspruch 1 oder 2,
**dadurch gekennzeichnet,**
daß als Einrichtung (41) zum Überführen der Stückgüter (2, 3) aus den Behältnissen (10) in die Verpackungsvorrichtung (5) ein Drehlader (42) vorgesehen ist, der einen drehbar gelagerten mit Greifern oder Unterdruckkammern versehenen Greifarm (43) aufweist, mittels dem die Stückgüter (2, 3) portions- und taktweise in beispielsweise ausgeformte Verpackungsbehälter (Schalen 7) einlegbar sind.

4. Einrichtung nach einem oder mehreren der Ansprüche 1 bis 3,
**dadurch gekennzeichnet,**
daß einem oder beiden Transportbandabschnitten (12, 13) ein jeweils durch einen Querschieber (22, 23) gebildeter Linienverteiler (19, 20) zugeordnet ist.

5. Einrichtung nach einem oder mehreren der Ansprüche 1 bis 4,
**dadurch gekennzeichnet,**
daß der erste Transportbandabschnitt (12) mit einer vorzugsweise selbsttätig arbeitenden Fülleinrichtung, beispielsweise einer Wurstaufschneideeinrichtung (4) oder einer Beschickungsvorrichtung (4'), versehen ist.

6. Einrichtung nach Anspruch 5,
**dadurch gekennzeichnet,**
daß der Fülleinrichtung (4) bzw. der Beschickungsvorrichtung (4') eine Kontrollstation (24) in Form eines unabhängig antreibbaren, an eine Waage (26) angeschlossenen Förderbandes (25) nachgeschaltet ist.

7. Einrichtung nach Anspruch 6,
**dadurch gekennzeichnet,**
daß der Kontrolleinrichtung (24) eine Auswurfstation (27) in Form eines mit einem unabhängig antreibbaren Förderbandes (28) zusammenwirkenden Querschiebers (29) nachgeschaltet ist, die durch die Kontrollstation (24) in Abhängigkeit von deren Meßergebnisse betätigbar ist.

8. Einrichtung nach einem oder mehreren der Ansprüche 5 bis 7,
**dadurch gekennzeichnet,**
daß der Fülleinrichtung (4) bzw. der Beschickungsvorrichtung (4') eine durch ein unabhängig antreibbares Förderband (32) gebildete Pufferzone (31) nachgeschaltet ist.

9. Einrichtung nach einem oder mehreren der Ansprüche 1 bis 8,
**dadurch gekennzeichnet,**
daß dem zweiten Transportbandabschnitt eine oder mehrere Stationen zur Befüllung der Behältnisse (10') von Hand zugeordnet sind.

## Claims

1. Device (1) for transferring articles (2, 3) from one station to another, for example for transferring sausages or similar articles from a production or filling station (4) to a packaging device (5) by means of a driven conveyer belt (11), whereby the articles (2, 3) to be transferred are accommodated in containers (10, 10') which are open at the top, and which are shaped, in a preferred embodiment, as rectangular trays or similar containers within which the articles (2, 3) may be placed and which are fixed on the conveyer belt (11) in one or several rows, whereby the conveyer belt (11) incorporates a first conveyer belt section (12) for transporting the containers (10) when they are full, and a second conveyer belt section (13) for returning the empty containers (10'), and whereby the conveyer belt (11) incorporates a device (41) by means of which the articles (2, 3) can be removed from the containers (10) and placed in the packing device (5).
**characterized in that,**
the two conveyer belt sections (12, 13) run vertically one above the other on different planes (A, B) and are controlled so as to be driven in opposite directions, and
that the conveyer belt (11) has transfer stations (14, 15) consisting of endless conveyer belts (16, 17) which can be moved to different heights and by means of which the containers (10, 10') located in the end zones of the conveyer belt (11) can be transferred from one conveyer belt section (12 or 13) to the other conveyer belt section (13 or 12).

2. Device in accordance with Claim 1,
**characterized in that,**
the conveyer belts (16, 17) of the transfer stations (14, 15) can be driven independently of the conveyer belt sections (12, 13) and can be alternately connected to the latter by means of a lifting element (18, 19).

3. Device in accordance with Claim 1 or Claim 2,
**characterized in that,**
a rotary loader (42) is provided as a device (41) for transferring the articles (2, 3) from the containers (10) into the packing device (5), whereby this rotary loader (42) has a grab arm (43) which is mounted so as to enable it to rotate, and incorporates grabs or vacuum chambers by means of which the articles (2, 3) can be inserted as portions and in sequence into, for example, moulded packaging containers (trays 7).

4. Device in accordance with one or more of Claims 1 to 3,
**characterized in that,**
one or both conveyer belt sections (12, 13) has a linear distributor (19, 20) consisting in each case of a cross-slide (22, 23).

5. Device in accordance with one or more of Claims 1 to 4,
**characterized in that,**
the first conveyer belt section (12) has a loading device which, in a preferred embodiment, operates automatically, for example a sausage slicing device (4) or a filling device (4').

6. Device in accordance with Claim 5,
**characterized in that,**
the loading device (4) or the filling device (4') is located ahead of a checking station (24) in the form of an independently driven conveyer belt (25) which is connected to a weighing device (26).

7. Device in accordance with Claim 6,
**characterized in that,**
the checking station (24) is located ahead of a reject station (27) in the form of an independently driven conveyer belt (28) working in conjunction with a cross-slide (29), which is operable by the control station (24) depending on its measurement results.

8. Device in accordance with one or more of Claims 5 to 7,
**characterized in that,**
the loading device (4) or the filling device (4') is located ahead of a buffer zone (31) formed by an independently driven conveyer belt (32).

9. Device in accordance with one or more of Claims 1 to 8,
**characterized in that,**
the second conveyer belt section incorporates one or more stations for filling the containers (10') by hand.

## Revendications

1. Dispositif (1) pour transférer des articles (2, 3) d'une station à une autre, par exemple de la charcuterie ou des produits semblables d'une station de production ou de chargement (4) à un dispositif d'emballage (5) au moyen d'une bande de transport entraînée (11), les articles (2, 3) à transférer étant transportés dans des réservoirs (10, 10') ouverts en haut, de préférence sous la forme de palettes ou de réservoirs semblables rectangulaires recevant les articles (2, 3) en portions et qui s'appuyent en une ou plusieurs rangées sur la bande de transport (11) consistant d'une première section (12) destinée au transport des réservoirs remplis (10), et d'une deuxième section (13) destinée à ramener les réservoirs vidés (10'), la bande de transport (11) étant accompagnée d'un dispositif (41) servant à charger les articles (2, 3) depuis les réservoirs (10) dans le dispositif d'emballage (5),
caractérisé en ce que
les deux sections (12, 13) de la bande de transport soient disposées verticalement l'une au-dessus de l'autre dans des plans différents (A, B) et qu'elles soient entraînées dans des sens opposés l'une par rapport à l'autre et que la bande de transport (11) soit pourvue de stations de transfert (14, 15) consistant de bandes de transport continues (16, 17) réglables en hauteur et qui, aux extrémités de la bande de transport (11), perpermettent de faire passer les réservoirs (10, 10') d'une section de la bande de transport (12 ou 13) à l'autre (13 ou 12).

2. Dispositif d'après la revendication 1,
caractérisé en ce que
les bandes de transport (16, 17) des stations de transfert (14, 15) se laissent entrainer indépendamment des sections (12, 13) de la bande de transport et se laissent raccorder alternativement à celles-ci au moyen d'un membre de levage (18, 19).

3. Dispositif d'après la revendication 1 ou 2,
caractérisé en ce que,
en tant que dispositif (41) pour le transfert des articles (2, 3) hors des réservoirs (10) dans le dispositif d'emballage (5), il soit prévu un chargeur rotatif (42) muni d'un bras rotatif (43) équipé de griffes ou de chambres sous vide, qui permet d'introduire les articles (2, 3) en portions et en cycles, par exemple dans des réservoirs d'emballage préformés (palettes 7).

4. Dispositif d'après une ou plusieurs des revendications 1 à 3,
caractérisé en ce
qu'il soit assigné respectivement à l'une ou aux deux sections de la bande de transport (12, 13), un distributeur de rangée (19, 20) formé par un tiroir transversal (22, 23).

5. Dispositif d'après une ou plusieurs des revendications 1 à 4,
caractérisé en ce que
la première section de la bande de transport (12) soit équipée d'un équipement de remplissage fonctionnant de préférence automatiquement, p.ex. un équipement de découpe de charcuterie (4) ou un équipement de chargement (4').

6. Dispositif d'après la revendication 5,
caractérisé en ce que
l'équipement de remplissage (4) ou l'equipement de chargement (4') soit suivi par une station de contrôle (24) sous la forme d'une bande de transport (25) entraînée individuellement et raccordée à une balance (26).

7. Dispositif d'après la revendication 6,
caractérisé en ce que
l'équipement de contrôle (24) est suivi d'une station d'éjection (27) sous la forme d'un tiroir transversal (29) collaborant avec la bande de transport (28) entraînée individuellement, et commandée par la station de contrôle (24) en fonction de ses résultats de mesure.

8. Dispositif d'après une ou plusieurs des revendications 5 à 7,
caractérisé en ce que
l'équipement de remplissage (4) ou l'équipement de chargement (4') soit suivi d'une zone-tampon (31) formée par une bande de transport (32) entraînée individuellement.

9. Dispositif d'après une ou plusieurs des revendications 1 à 8
caractérisé en ce
qu'il soi assignée à la deuxième section de la bande de transport, une ou plusieurs stations servant au chargement manuel des réservoirs (10').
